# EUROPÄISCHE PATENTSCHRIFT

(11) **EP 2 385 076 B1**
(45) Veröffentlichungstag und Bekanntmachung des Hinweises auf die Patenterteilung: **23.03.2016**
(21) Anmeldenummer: 11173075.0
(22) Anmeldetag: 08.04.2008
(51) Int. Cl.: C08G 18/77, C09D 183/04, C09D 183/06, C09D 183/08, C09D 175/04

(54) **Verfahren zur Herstellung eines Beschichtungsmaterials**
Method for producing a coating material
Procédé de fabrication d'un matériau de revêtement

(30) Priorität: 27.04.2007 DE 102007020404
(43) Veröffentlichungstag der Anmeldung: 09.11.2011
(62) Teilanmeldung aus: 08734470.1
(73) Patentinhaber: Nano-X GmbH, 66130 Saarbrücken (DE)
(72) Erfinder: Laryea, Nora, 66113 Saarbrücken (DE); Thurn, Carolin, 66787 Wadgassen (DE); Sepeur, Stefan, 66787 Wadgassen (DE)
(74) Vertreter: Teipel, Stephan

(56) Entgegenhaltungen:
- EP-A- 1 544 223
- WO-A-92/11328
- DE-A1-102006 044 310

## Beschreibung

Die Erfindung betrifft ein Verfahren zur Herstellung eines Beschichtungsmaterials. Sie betrifft weiterhin die Verwendung des Beschichtungsmaterials.

Es sind Pulverlacke bekannt, die aus Polysiloxanen hergestellt werden, die über die organische Funktionalisierung (OH-, COOH-, NCO-Gruppe(n)) mit entsprechenden Verbindungen bzw. Katalysatoren vernetzt werden. Solche als Korrosionsschutzbeschichtung für Metalle eingesetzte Beschichtungssysteme sind beispielsweise aus der US 6,376,607 B1 bekannt.

Diese Beschichtungssysteme zeigen gute Korrosionsbeständigkeit, aber meist nur moderate Abriebbeständigkeiten.

Alternative Pulverlacke sind epoxy- oder acrylatmodifizierte Polymere, die mittels entsprechender Katalysatoren vernetzt werden und die beispielsweise als Klarlacke für Automobilanwendungen eingesetzt werden. Diese Beschichtungssysteme, die beispielsweise aus der US 6,376,608 B1 bekannt sind, zeigen allerdings nur moderate Chemikalienbeständigkeiten bzw. Kratzfestigkeiten.

Für kratzfeste Bindemittel werden beispielsweise in der WO 2006/042658 A1 auch Umsetzungen von Isocyanaten (HDI) mit aminofunktionellen Silanen beschrieben, die beispielsweise mit entsprechenden Katalysatoren vernetzt werden, welche allerdings nur in aprotischen Lösungsmitteln bzw. aprotischen Lösungsmittelgemischen gelöst werden.

Aus der US 2002/0042461 A1 ist eine Verbindung mit mindestens einem zyklischen Olefin-Additionspolymer bekannt, die unter anderem eine organische Carboxyl-, Phosphor- oder Sulfonsäure, Ammonium, primäre bis tertiäre Aminoverbindungen oder eine quaternäre Ammoniumhydroxidverbindung enthält und die optische Transparenz, Lösungsmittelbeständigkeit, Hitzebeständigkeit und gute Haftung auf Metallen und an anorganischen Substanzen aufweist.

Die WO 92/11328 offenbart ein Beschichtungsmaterial, das neben einem filmbildenden Organosilanpolymer einen flüssigen organischen Träger enthält.

Aufgabe der Erfindung ist es, ein Verfahren zur Herstellung eines neuen Beschichtungsmaterials in Form eines Pülverlacks zu schaffen, mit dem kratzfeste Beschichtungen hergestellt werden können.

Diese Aufgabe wird erfindungsgemäß durch ein Verfahren zum Herstellen eines Beschichtungsmaterials gelöst, das die Methode gemäß Anspruch 1 aufweist.

Es ist zur Erfindung gehörig, daß die resultierenden Verbindungen als Pulverlack oder als fließfähiges Harz vorliegen.

Überraschenderweise hat sich gezeigt, daß durch die Reaktion von (allenfalls geringfügig vorvernetzten) organisch funktionalisierten Silanen, beispielsweise mit einer NCO-Funktionalisierung und geeigneten Reaktionspartnern eine neue Klasse von Verbindungen erzeugt werden können, die als Beschichtungsmaterial in Form von Pulverlacken oder High Solid Bindemitteln bzw. 100%igen Harzen, verwendet werden können. Silane werden gemäß dem Stand der Technik über Sol-Gel-Prozesse verarbeitet, wobei von vorkondensierten Spezies ausgegangen wird. Die erfindungsgemäße Vorgehensweise, bei der eine Vorkondensationsreaktion weitgehend oder völlig vermieden wird, ist demgegenüber insofern vorteilhaft, als keine Restriktionen hinsichtlich der Topfzeit mehr vorliegen und zudem bessere Elgenschaften des Beschichtungsmaterials erreicht werden, insbesondere eine hohe Kratzfestigkeit. Die entstehenden höhermolekulare Silane können entweder als bei Temperaturen oberhalb von 80°C wieder aufschmelzbarer Feststoff oder als noch fließfähiges 100%iges Harz vorliegen.

Erfindungsgemäß ist vorgesehen, daß alle der funktionellen organischen Gruppen des Moleküls, Oligomers oder Polymers durch eine Reaktion mit einer organischen funktionellen Gruppe eines Silanes abreagieren.

Bevorzugte Ausbildungen der Erfindung bestehen darin, daß die Silane mit einer funktionellen Gruppe an einer organischen Seitenkette aus der Gruppe bestehend aus Monoamin-funktionalisierten Silanen (Trialkoxy, Dialkoxy, Monoalkoxy), Diaminfunktionalisierten Silanen (Trialkoxy, Dialkoxy, Monoalkoxy), Triamin- funktionalisierten Silanen, sec-Amin-funktionalisierten Silanen, tert-Amin-funktionalisierten Silane, quat-Aminfunktionalisierten Silanen, Dipodal-Amin funktionalisierten Silanen, Anhydridfunktionalisierten Silanen, Acrylat- und Methacrylat-funktionalisierten Silanen (Trialkoxy, Dialkoxy, Monoalkoxy), Epoxy-funktionalisierten Silanen (Trialkoxy, Dialkoxy, Monoalkoxy), Halogen- funktionalisierten Silanen (Trialkoxy, Dialkoxy, Monoalkoxy), Isocyanat- und mit maskierten Isocyanaten funktionalisierten Silanen, Phosphat-funktionalisierten Silanen, Schwefel-funktionalisierten Silanen, Vinyl- und Olefin-funktionalisierten Silanen (Trialkoxy, Dialkoxy, Monoalkoxy) und Trimethoxysilylpropylmodifizierte Polyethylenimine ausgewählt sind.

Als Silane kommen insbesondere die folgenden in Frage: 3-Aminopropyltriethoxysilan, Aminoethylaminpropyltrimethoxysilan, Aminoethylaminopropyltrimethoxysilan, Aminoethylaminopropylsilan, 3-Aminopropyltrimethoxysilan, N-(2-Aminoethyl)-3-aminopropyltrimethoxysilan, N-(2-Aminoethyl)-3-aminopropylmethyldimethoxysilan, N-(2-Aminoethyl)-3-aminopropylmethyldimethoxysilan, N-Cyclohexyl-3-aminopropyltrimethoxysilan, Benzylaminoethylaminopropyltrimethoxysilan, Vinylbenzylaminoethylaminopropyltrimethoxysilan, Vinyltrimethoxysilan, Vinyltriethoxysilan, Vinyldimethoxymethylsilan, Vinyl(tris)methoxyethoxy)silan, Vinylmethoxymethylsilan, Vinyltris(2-methoxyethoxy)silan, Vinyltriacetoxysilan, Chloropropyltrimethoxysilan, 3-Glycidoxypropyltrimethoxysilan, 3 -Glycidoxypropyltriethoxysilan Glycidoxypropylmethyldiethoxysilan, Mercaptopropyl-trimethoxysilan, Bis-Triethoxysilylpropyldisulfidosilan, Bis-Triethoxysilyl-propyldisulfidosilan, Bis-Triethoxysilylpropyltetroasulfidosilan, N-Cyclohexylaminomethylmethyldieethoxysilan, N-Cyclohexylaminomethyltriethoxysilan, N-Phenylaminomethyltrimethoxysilan, (Methacryloxymethyl)methyldimethoxysilan, Methacryl-oxymethyltrimethoxysilan, (Methacryloxymethyl)methyldiethoxysilan, Methacryloxymethyl-triethoxysilan, 3-Methacryloxypropyltrimethoxysilan, 3-Methacryloxypropyltrimethoxysilan, 3-Methacryloxypropyltriacetoxysilan, (Isocyanatomethyl)methyldimethoxysilan, 3-Isocyanatopropyltrimethoxysilan, 3-Isocyanatopropyltriethoxysilan, 3-Trimethoxysilylinethyl-O-methylcarbamat, N-Dimethoxy-(methyl)silylmethyl-O-methylcarbamat, 3-(Triethoxysilyl)propylbernsteinsäure-anhydrid, Dicyclopentyldimethoxysilan und sowie 3-(trimethoxysilyl)-propyldimethyloctadecylammoniumchlorid, Tris(3-Trimethoxysilyl)isocyanurate, 3-Triethoxysilylpropyl)-t-butylcarbamate, Triethoxysilylpropylethylcarbamate, 3-Thiocyanatopropyltriethoxysilane, Bis[3-(Triethoxysilyl)propyl]-tetrasulfide, Bis[3-(Triethoxysilyl)propyl]-disulfide, 3-Mercaptopropylmethyldimethoxysilan.

Es liegt im Rahmen der Erfindung, daß der Wassergehalt maximal 1% beträgt und besonders bevorzugt die Reaktion ohne Anwesenheit von Wasser durchgeführt wird. In der Regel ist die Luftfeuchtigkeit für die Reaktion nicht störend.

Es hat sich als vorteilhaft erwiesen, daß die resultierende Verbindung, die wiederum ein Silan darstellt, eine Molmasse von mindestens 500 g/mol aufweist.

In diesem Zusammenhang ist vorgesehen, daß das bzw. die Silane maximal zu 5 %, bevorzugt maximal zu 1 % und besonders bevorzugt nicht anorganisch vorvernetzt sind.

Eine Weiterbildung der Erfindung besteht darin, daß als Katalysatoren bis zu 20 Gew.-%, bevorzugt 0,5 bis 50 Gew.-% Silane, insbesondere Aminosilane, oder Lewissäuren oder Lewisbasen, insbesondere in Form von Übergangsmetallkomplexen, -salzen oder -partikeln, bevorzugt Mikro- oder Nanopartikeln, verwendet werden.

In diesem Zusammenhang wird bevorzugt, daß die Übergangsmetallkomplexe, -salze oder - partikel Titan-, Aluminium-, Zinn- oder Zirkoniumkomplexe sind.

Weiterhin kann vorgesehen sein, daß als Füllstoffe anorganische oder organische Partikel, insbesondere Mikro-, Submikro- oder Nanopartikel zugegeben werden.

Ebenfalls liegt es im Rahmen der Erfindung, daß Mattierungsstoffe, Netzdispergiermittel, UV-Absorber, UV-Stabilisatoren, HALS-Stabilisatoren, Radikalfänger, Entschäumer, Wachse, Biozide, Konservierungsmittel, anorganische oder organische Füllstoffe, Teflon-Partikel, Wachse oder Farbpigmente zugesetzt werden.

Weiterhin ist im Rahmen der Erfindung vorgesehen, daß das Beschichtungsmaterial. elektrostatisch, triboelektrisch oder naßchemisch, insbesondere durch Sprühen, Tauchen, Fluten, Rollen, Streichen, Drucken, Schleudern, Rakeln oder aber durch Verdampfen im Vakuum auf ein Substrat auftragbar ist.

Hierbei ist es erfindungsgemäß, daß das Substrat aus Metall, Kunststoff, Keramik, Lack, Textilien, Naturstoffen, wie Holz und Leder, aus Glas, mineralischen Substanzen, insbesondere Kunst- oder Natursteinen, wie Marmor und Granit, oder Verbundmaterialien besteht

Eine Weiterbildung des erfindungsgemäßen Verfahrens besteht darin, daß das Beschichtungsmaterial nach dem Auftragen bei Temperaturen von Raumtemperatur bis 1.200°C, vorzugsweise von 50°C bis 250°C härtbar ist, wobei das Härten vorzugsweise thermisch, mit Mikrowellenstrahlung oder UV-Strahlung erfolgt.

Eine Weiterbildung der Erfindung besteht darin, daß die Härtung bei Raumtemperatur durch den Zusatz von organischen Säuren oder Basen oder mit UV-Licht durch radikalische oder kationische Polymerisation nach Zusatz von radikalisch oder kationisch initüerenden Photoinitiatoren erfolgt.

Im Rahmen der Erfindung liegt auch die Verwendung des erfindungsgemäß hergestellten Beschichtungsmaterials zum Herstellen von Kratzfest-, Antikorrosions-, Easy-to-Clean-, Antifingerprint-, Antireflex-, Antibeschlag-, Verzunderungsschutz-, Antifouling-, Diffusionssperr-, Holzschutz-, Strahlenschutz-Beschichtungen oder als selbstreinigende, antibakterielle, antimikrobielle, chemikalienresistente, tribologische oder hydrophile Beschichtungen sowie in biomedizinischen Anwendungen, insbesondere zur Förderung des Anwachsens von Geweben und zur Beeinflussung der Blutgerinnung sowie zur Behandlung von Gewebe und Implantaten.

Nachfolgend wird die Erfindung anhand von Ausführungsbeispielen näher erläutert.

### Beispiel 1:

### Stufe 1:

11,8 g Hexandiol werden mit 49,5 g ICTES (Isocyanatopropyltriethoxysilan) auf 80 °C unter Rühren erwärmt und mit 0,1 g Dibutylzinndilaurat versetzt. Danach wird das Gemisch auf 50°C abkühlen gelassen und nach Methode A und B weiterverarbeitet.

### Stufe 2 Methode A (Pulverlackformulierung):

Bei dieser Temperatur werden 10 Reaktionsproduktes mit 0,1 g Aluminiumacetylacetonat (50%ig gelöst in 2-Butanol) vermischt. Dieses Gemisch wird dann weiter langsam auf Raumtemperatur abgekühlt. Das anschließend auskristallisierte Harz wird dann in einer Spezialmühle in Korngrößen von < 50 µm zerkleinert und gesiebt. Als Verlaufsaddtiv werden dem Pulver 0,8% Byk 359 zugesetzt und gut gemischt.
Das so hergestellt Pulver wird anschließend durch elektrostatisches oder triboelektrisches Spritzen auf ein bereits farbig lackiertes Stahlblech ausgetragen und bei 130°C im Umlufttrockenschrank getrocknet.

Die erhaltene Schicht nach Methode A hergestellter Proben zeigen hervorragende Kratzbeständigkeit gegenüber Stahlwolle und Chemikalienbeständigkeit gegenüber 36%ige Schwefelsäure ohne Angriff (Anätzung) von > 30 min.

### Beispiel 2

1 mol H[O(CH₂)₄]nOH (PolyTHF 2000, BASF) werden mit 2 mol Isoyanatopropyltriethoxysilan (ICTES) nach Erhitzen auf min. 80°C gebracht bis eine homogene transparente Mischung entsteht. Danach werden 2 Tropfen Dibutylzinndilaurat zugegeben und weiter ca. 8 h gerührt. Danach wird das Gemisch auf Raumtemperatur abgekühlt.

Das Gemisch wurde danach auf eine Polycarbonat-Platte durch Tauchen aufgebracht und anschließend bei 130°C getrocknet. Die beschichtete Probescheibe wird flächig im Abstand von 15 cm über einen Topf kochendes Wasser gelegt und 20 sec. beobachtet. Bei diesem Test zeigte sich kein Beschlagen der beschichteten Platten-Seite.

## Patentansprüche

1. Verfahren zum Herstellen eines Beschichtungsmaterials, das als Pulverlack oder fließfähiges Harz vorliegt, **dadurch gekennzeichnet, dass** ein oder mehrere organische Moleküle, Oligomere oder Polymere, ausgewählt aus der Gruppe bestehend aus Aminen, Isocyanaten, Schwefelwasserstoffverbindungen, Phosphaten, Anhydriden, Carbonsäuren, Methacrylaten, Acrylaten, Aminosäuren oder DNA, Hormonen, Enzymen, Peptiden, Zuckern, Polysachariden, biomediznischen Wirkstoffen und Naturstoffen, mit einem oder mehreren Silanen mit mindestens einer funktionellen organischen Gruppe an einer organischen Seitenkette unter Ausbildung einer kovalenten Bindung zwischen dem organischen Molekül, Oligomer oder Polymer und dem Silan reagiert, wobei alle der funktionellen organischen Gruppen des Moleküls, Oligomers oder Polymers durch eine Reaktion mit einer organischen funktionellen Gruppe eines Silanes abreagieren, so dass ein höhermolekulares Silan resultiert, welches durch einen Katalysator direkt härtbar ist.

2. Verfahren gemäß Anspruch 1, wobei alle der funktionellen organischen Gruppen des Moleküls, Oligomers oder Polymers durch eine Reaktion mit einer organischen funktionellen Gruppe eines Silanes abreagieren.

3. Verfahren gemäß Anspruch 1, **dadurch gekennzeichnet, dass** die Silane mit einer funktionellen Gruppe an einer organischen Seitenkette aus der Gruppe bestehend aus Monoamin-funktionalisierten Silane (Trialkoxy, Dialkoxy, Monoalkoxy), Diaminfunktionalisierten Silanen (Trialkoxy, Dialkoxy, Monoalkoxy), Triamin-funktionalisierten Silanen, sec-Amin-funktionalisierten Silanen, tert-Amin-funktionalisierten Silane, quat-Aminfunktionalisierten Silanen, Dipodal-Amin funktionalisierten Silanen, Anhydrid-funktionalisierten Silanen, Acrylat- und Methacrylat-funktionalisierten Silanen (Trialkoxy, Dialkoxy, Monoalkoxy), Epoxy-funktionalisierten Silanen (Trialkoxy, Dialkoxy, Monoalkoxy), Halogen-funktionalisierten Silanen (Trialkoxy, Dialkoxy, Monoalkoxy), Isocyanat- und mit maskierten Isocyanaten funktionalisierten Silanen, Phosphat-funktionalisierten Silanen, Schwefel-funktionalisierten Silanen, Vinyl- und Olefin-funktionalisierten Silanen (Trialkoxy, Dialkoxy, Monoalkoxy) und Trimethoxysilypropyl-modifizierte Polyethylenimine ausgewählt sind.

4. Verfahren gemäß Anspruch 1, **dadurch gekennzeichnet, dass** die resultierenden Verbindungen eine Molmasse von mindestens 500 g/mol aufweisen.

5. Verfahren gemäß Anspruch 1, **dadurch gekennzeichnet, dass** als Katalysatoren bis zu 20 Gew.-% bevorzugt 0,5 bis 50 Gew.-% Silane, insbesondere Aminosilane, oder Lewissäuren oder Lewisbasen, insbesondere in Form von Übergangsmetallkomplexen, -salzen oder -partikeln, bevorzugt Mikro- oder Nanopartikeln, verwendet werden.

6. Verfahren gemäß Anspruch 5, **dadurch gekennzeichnet, dass** die Übergangsmetallkomplexe, -salze oder -partikel Titan-, Aluminium-, Zinn- oder Zirkoniumkomplexe sind.

7. Verfahren gemäß Anspruch 1, dadurch gekennezeichnet, dass als Füllstoffe anorganische oder organische Partikel, insbesondere Mikro-, Submikro- oder Nanopartikel zugegeben werden.

8. Verfahren gemäß Anspruch 1, **dadurch gekennzeichnet, dass** Mattierungsstoffe, Netzdispergiermittel, UV-Absorber, UV-Stabilisatoren, HALS-Stabilisatoren, Radikalfänger, Entschäumer, Wachse, Biozide, Konservierungsmittel, anorganische oder organische Füllstoffe, Fluorcarbon-Partikel, Wachse oder Farbpigmente zugesetzt werden.

9. Verfahren gemäß Anspruch 1, **dadurch gekennzeichnet, dass** das Beschichtungsmaterial elektrostatisch, triboelektrisch oder naßchemisch, insbesondere durch Sprühen, Tauchen, Fluten, Rollen, Streichen, Drucken, Schleudern, Rakeln oder aber auch durch Verdampfen im Vakuum auf ein Substrat auftragbar ist.

10. Verfahren gemäß Anspruch 9, **dadurch gekennzeichnet, dass** das Substrat aus Metall, Kunststoff, Keramik, Lack, Gewebe, Textilien, Naturstoffen, wie Holz oder Leder, aus Glas, mineralischen Substanzen, insbesondere Kunst- oder Natursteinen, wie Marmor und Granit, oder Verbundmaterialien besteht.

11. Verfahren gemäß Anspruch 9, **dadurch gekennzeichnet, dass** das Beschichtungsmaterial nach dem Auftragen bei Temperaturen von Raumtemperatur bis 1.200°C, vorzugsweise von Raumtemperatur bis 250°C härtbar ist, wobei das Härten vorzugsweise thermisch, mit Mikrowellenstrahlung, Elektronenstrahlung oder UV-Strahlung oder Kombinationen hiervon erfolgt.

12. Verfahren gemäß Anspruch 11, **dadurch gekennzeichnet, dass** die Härtung bei Raumtemperatur durch den Zusatz von organischen Säuren oder Basen oder mit UV-Licht durch radikalische oder kationische Polymerisation nach Zusatz von radikalisch oder kationisch initiierenden Photoinitiatoren erfolgt.

13. Pulverlack oder fließfähiges Harz, erhältlich nach dem Verfahren gemäß einem der Anprüche 1-12.

14. Verwendung eines Pulverlacks oder fließfähigen Harzes gemäß Anspruch 13 zum Herstellen von Kratzfest-, Antikorrosions-, Easy-to-Clean-, Antifingerprint-, Antireflex-, Antibeschlag-, Verzunderungsschutz-, Antifouling-, Holzschutz-, Diffusionssperr-, Strahlenschutz-Beschichtungen oder als selbstreinigende, antibakterielle, antimikrobielle, chemikalienresistente, tribologische oder hydrophile Beschichtungen sowie in biomedizinischen Anwendungen, insbesondere zur Förderung des Anwachsens von Geweben und zur Beeinflussung der Blutgerinnung sowie zur Behandlung von Gewebe und Implantaten.

## Claims

1. Method for producing a coating material being in the form of coating powder or free-flowing resin, **characterised in that** one or more organic molecules, oligomers or polymers, selected from the group consisting of amines, isocyanates, hydrogen sulfides, phosphates, anhydrides, carbonic acids, methacrylates, acrylates, amino acids or DNA, hormones, enzymes, peptides, sugars, polysaccharides, biomedical substances and natural substances reacts with one or more silanes having at least one functional organic group on an organic side chain to form a covalent bond between the organic molecule, oligomer or polymer and the silane, wherein all of the functional organic groups of the molecule, oligomer or polymer lose their reactivity by way of a reaction with an organic functional group of a silane, thus resulting in a higher molecular weight silane which can be cured directly by means of a catalyst.

2. Method according to claim 1, wherein all of the functional organic groups of the molecule, oligomer or polymer lose their reactivity by way of a reaction with an organic functional group of a silane.

3. Method according to claim 1, **characterized in that** the silanes having a functional group on an organic side chain are selected from the group consisting of monoamine functionalised silane (trialkoxy, dialkoxy, monoalkoxy), diamine functionalised silanes (trialkoxy, dialkoxy, monoalkoxy), triamine functionalised silanes, sec-amine functionalised silanes, tert-amine functionalised silanes, quat-amine functionalised silanes, dipodal-amine functionalised silanes, anhydride functionalised silanes, acrylate and methacrylate functionalised silanes (trialkoxy, dialkoxy, monoalkoxy), epoxy functionalised silanes (trialkoxy, dialkoxy, monoalkoxy), halogen functionalised silanes (trialkoxy, dialoxy, monoalkoxy), isocyanato functionalised silanes and silanes functionalised with masked isocyanates, phosphate functionalised silanes, sulfur functionalised silanes, vinyl and olefin functionalised silanes (trialkoxy, dialkoxy, monoalkoxy) and trimethoxysilylpropyl modified polyethylenimines.

4. Method according to claim 1, **characterised in that** the resultant compounds have a molar mass of at least 500 g/mol.

5. Method according to claim 1, **characterised in that** up to 20 wt.%, preferably 0.5 to 50 wt.% of silanes, in particular aminosilanes, or Lewis acids or Lewis bases, in particular in the form of transition metal complexes, salts or particles, preferably micro or nano particles, are used as catalysts.

6. Method according to claim 5, **characterised in that** the transition metal complexes, salts or particles are complexes of titanium, aluminum, tin or zirconium.

7. Method according to claim 1, **characterised in that** inorganic or organic particles, in particular micro, submicro or nano particles, are added as fillers.

8. Method according to claim 1, **characterised in that** matting agents, wetting dispersants, UV absorbers, UV stabilizers, HALS stabilizers, free-radical scavengers, defoaming agents, waxes, biocides, preservatives, inorganic or organic fillers, fluorocarbon particles, waxes or pigments are added.

9. Method according to claim 1, **characterised in that** the coating material is applied to a substrate electrostatically, triboelectrically or by a wet-chemical process, in particular by spraying, dipping, flooding, roll-coating, brushing, printing, spin-coating, by doctor knife or by vaporising under vacuum.

10. Method according to claim 9, **characterised in that** the substrate consists of metal, plastic, ceramic, coating substance, fabric, textiles, natural substances such as wood and leather, glass, mineral substances, in particular artificial or natural stones, such as marble or granite, or composite materials.

11. Method according to claim 9, **characterised in that**, following application, the coating material is curable at temperatures in the range from room temperature to 1,200 °C, preferably in the range from room temperature to 250 °C, wherein the curing preferably is effected thermally, by microwave radiation, electron radiation or UV radiation or combinations thereof.

12. Method according to claim 11, **characterised in that** curing is effected at room temperature by the addition of organic acids or bases or with UV light by way of free-radical or cationic polymerisation following addition of photoinitiators for free-radical or cationic polymerisation.

13. Powder coating or free-flowing resin, obtainable by the method according to any one of claims 1-12.

14. Use of the coating material or free-flowing resin according to claim 13 for fabricating scratchproof, anticorrosion, easy-to-clean, antifingerprint, antireflection, antifogging, antiscaling, antifouling, wood-protection, diffusion-barrier, and radiation-protection coatings, or as self-cleaning, antibacterial, antimicrobial, chemical-resistant, tribological or hydrophilic coatings, and in biomedical applications, in particular for promoting the growth of tissues and for influencing blood clotting, and for the treatment of tissue and implants.

## Revendications

1. Procédé servant à fabriquer un matériau de revêtement qui se présente sous la forme d'un vernis en poudre ou d'une résine liquide, **caractérisé en ce qu'**une ou plusieurs molécules organiques, des oligomères ou des polymères sont choisis parmi le groupe constitué d'amines, d'isocyanates, de composés de sulfure d'hydrogène, de phosphates, d'anhydrides, d'acides carboxyliques, de méthacrylates, d'acrylates, d'acides aminés ou d'ADN, d'hormones, d'enzymes, de peptides, de sucres, de polysaccharides, de principes actifs biomédicaux et de substances naturelles, **en ce qu'**elles réagissent avec un ou plusieurs silanes comprenant au moins un groupe organique fonctionnel au niveau d'une chaîne latérale organique en réalisant une liaison covalente entre la molécule organique, l'oligomère ou le polymère et le silane, tous les groupes organiques fonctionnels de la molécule, de l'oligomère et du polymère réagissant par une réaction avec un groupe fonctionnel organique d'un silane de sorte qu'il en résulte un silane à poids moléculaire élevé, qui peut durcir directement par un catalyseur.

2. Procédé selon la revendication 1, tous les groupes organiques fonctionnels de la molécule, de l'oligomère ou du polymère réagissant par une réaction avec un groupe fonctionnel organique d'un silane.

3. Procédé selon la revendication 1, **caractérisé en ce que** les silanes comprenant un groupe fonctionnel au niveau d'une chaîne latérale organique sont choisis parmi le groupe constitué de silanes rendus fonctionnels par de la monoamine (trialkoxy, dialkoxy, monoalkoxy), des silanes rendus fonctionnels par de la diamine (trialkoxy, dialkoxy, monoalkoxy), des silanes rendus fonctionnels par de la triamine, des silanes rendus fonctionnels par de l'amine sec., des silanes rendus fonctionnels par de l'amine tert., des silanes rendus fonctionnels par de l'amine quat., des silanes rendus fonctionnels par l'amine dipodal, des silanes rendus fonctionnels par de l'anhydride, des silanes rendus fonctionnels par du méthacrylate (trialkoxy, dialkoxy, monoalkoxy), des silanes rendus fonctionnels par de l'halogène (trialkoxy, dialkoxy, monoalkoxy), des silanes rendus fonctionnels par de l'isocyanate et des isocyanates masqués, des silanes rendus fonctionnels par du phosphate, des silanes rendus fonctionnels par du soufre, des silanes rendus fonctionnels par du vinyle et de l'oléfine (trialkoxy, dialkoxy, monoalkoxy) et des polyéthylènimines modifiés par du triméthoxy sily propyle.

4. Procédé selon la revendication 1, **caractérisé en ce que** les composés en résultant présentent une masse molaire d'au moins 500 g/mol.

5. Procédé selon la revendication 1, **caractérisé en ce qu'**on utilise en tant que catalyseurs jusqu'à 20 % en poids, de manière préférée de 0,5 à 50 % en poids des silanes, en particulier des aminosilanes ou des acides de Lewis ou des bases de Lewis, en particulier sous la forme de complexes, de sels ou de particules de métal de transition, de manière préférée des micro- ou nanoparticules.

6. Procédé selon la revendication 5, **caractérisé en ce que** les complexes, les sels ou les particules de métal de transition sont des complexes de titane, d'aluminium, d'étain ou de zirconium.

7. Procédé selon la revendication 1, **caractérisé en ce qu'**on ajoute, en tant que charges, des particules inorganiques ou organiques, en particulier des microparticules, des particules submicroniques ou des nanoparticules.

8. Procédé selon la revendication 1, **caractérisé en ce qu'**on ajoute des substances délustrantes, des agents mouillants de dispersion, des absorbeurs d'UV, des stabilisateurs d'UV, des stabilisateurs HALS, des fixateurs de radicaux, des agents antimousse, des cires, des biocides, des agents de conservation, des charges inorganiques ou organiques, des particules de fluorocarbone, des cires ou des pigments colorants.

9. Procédé selon la revendication 1, **caractérisé en ce que** le matériau de revêtement peut être appliqué sur un substrat de manière électrostatique, triboélectrique ou par voie chimique humide en particulier par pulvérisation, immersion, aspersion, application au rouleau, application au pinceau, impression, projection, raclage mais aussi par évaporation sous vide.

10. Procédé selon la revendication 9, **caractérisé en ce que** le substrat est constitué d'un métal, d'une matière plastique, d'une céramique, d'un vernis, d'un tissu, de textiles, de substances naturelles, telles que le bois ou le cuir, de verre, de substances minérales, en particulier des pierres de synthèse ou naturelles, telles que le marbre et le granit, ou des matériaux composés.

11. Procédé selon la revendication 9, **caractérisé en ce que** le matériau de revêtement peut être durci après l'application à des températures allant de la température ambiante à 1 200 °C, de préférence allant de la température ambiante à 250 °C, le durcissement étant effectué de préférence par voie thermique, à l'aide d'un rayonnement de microondes, d'un rayonnement d'électrons ou d'un rayonnement UV ou de combinaisons de ces derniers.

12. Procédé selon la revendication 11, **caractérisé en ce que** le durcissement est effectué à température ambiante par l'ajout d'acides ou de bases organiques ou avec de la lumière UV par polymérisation radicalaire ou cationique après l'ajout de photoinitiateurs à déclenchement radicalaire ou cationique.

13. Vernis en poudre ou résine liquide, obtenu/obtenue selon le procédé selon l'une quelconque des revendications 1 à 12.

14. Utilisation d'un vernis en poudre ou d'une résine liquide selon la revendication 13 afin de produire des revêtements résistants aux rayures, anticorrosion, simples à nettoyer, antitraces, antireflet, antibuée, anti-oxydation, anti-encrassement, de protection du bois, antidiffusion, de protection contre les rayonnements ou en tant que revêtements autonettoyants, antibactériens, antimicrobiens, résistants aux produits chimiques, tribologiques ou hydrophiles ainsi que dans des applications biomédicales, en particulier afin de favoriser le développement de tissus et d'influencer la coagulation et afin de traiter des tissus et des implants.
